Europäisches Patentamt

European Patent Office

Office européen des brevets

(19)

(11) **EP 1 501 234 A1**

(12) **EUROPÄISCHE PATENTANMELDUNG**

(43) Veröffentlichungstag:
26.01.2005 Patentblatt 2005/04

(51) Int Cl.⁷: **H04L 1/20**, H04L 25/03

(21) Anmeldenummer: 03016963.5

(22) Anmeldetag: **25.07.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **Com-Research GmbH Solutions for
Communication Systems
90765 Fürth (DE)**

(72) Erfinder: **Meyer, Raimund
90765 Fürth (DE)**

(74) Vertreter: **Schurack, Eduard F. et al
Hofstetter, Schurack & Skora
Balanstrasse 57
81541 München (DE)**

(54) **Verfahren und Vorrichtung zur Bestimmung des dominanten Störtyps**

(57) Die vorliegende Erfindung betrifft ein Verfahren zur digitalen Übertragung von Daten, wobei die Übertragung durch Modulation einer Trägerfrequenz erfolgt und durch mindestens zwei unterschiedliche Typen von Störungen gestört wird, auf der Empfängerseite folgende Schritte umfassend: a1) Ermitteln eines Schätzwerts für die Leistung des empfangenen Signals; a2) Ermitteln eines Schätzwerts für das Signalzu-Rausch-plus-Interferenz Verhältnis des empfangenen Signals; b) Zuführen zumindest der in den Schritten a1) und a2) ermittelten Schätzwerte an eine Entscheidungsvorrichtung, die anhand mindestens eines vorgebbaren Entscheidungskriteriums mindestens einen dominanten Störtyp bestimmt. Die Erfindung betrifft überdies eine Vorrichtung zum Empfang digital, durch Modulation einer Trägerfrequenz übertragener Daten, umfassend eine Vorrichtung (12) zur Ermittlung eines Schätzwerts für die Leistung des empfangenen Signals, eine Vorrichtung (10) zur Ermittlung eines Schätzwerts für das Signal-zu-Rausch-plus-Interferenz-Verhältnis des empfangenen Signals und eine Entscheidungsvorrichtung (14), die an die Vorrichtung (12) zur Ermittlung eines Schätzwerts für die Leistung und an die Vorrichtung (10) zur Ermittlung eines Schätzwerts für das Signal-zu-Rausch-plus-Interferenz-Verhältnis gekoppelt ist und ausgelegt ist, auf der Basis der ermittelten Schätzwerte anhand mindestens eines vorgebbaren Entscheidungskriteriums mindestens einen dominanten Störtyp zu ermitteln. Schließlich betrifft die Erfindung einen Halbleiterbaustein, in dem das erfindungsgemäße Verfahren abgelegt ist.

FIG. 1

**Beschreibung**

Die vorliegende Erfindung betrifft ein Verfahren und eine Vorrichtung zur digitalen Übertragung von Daten, wobei die Übertragung durch Modulation einer Trägerfrequenz erfolgt, wie z.B. beim Mobilfunksystem GSM (Global System for Mobile Communication) und durch mindestens zwei unterschiedliche Typen von Störungen gestört wird Sie betrifft insbesondere ein Verfahren und ein System zur Erkennung von Interferenzsignalen für TDMA- (Time-Division Multiple Access) und/oder FDMA-(Frequency-Division Multiple Access) Übertragung, die zumindest näherungsweise durch Pulsamplitudenmodulation beschreibbar ist. Eine näherungsweise Beschreibbarkeit durch Pulsamplitudenmodulation liegt vor, wenn der sich dabei ergebende Modellierungsfehler weniger als 10 % beträgt. Die Erfindung betrifft überdies einen Halbleiterbaustein, in dem das erfindungsgemäße Verfahren abgelegt ist.

Bei der trägerfrequenzbasierten digitalen Übertragung über dispersive Kanäle, z.B. über einen Mobilfunkkanal, wird das Sendesignal verzerrt und durch Rauschen und/oder Gleichkanal- und/oder Nachbarkanalstörer gestört. Im Empfänger sind somit spezielle Maßnahmen zur Rückgewinnung der gesendeten Daten notwendig, die allgemein als Entzerrung bezeichnet werden.

Die Leistungsfähigkeit des Empfängers im Hinblick auf eine möglichst fehlerfreie Rückgewinnung der gesendeten Daten hängt wesentlich von der Art und der Größe der im Übertragungskanal aufgebrachten Störung ab. Für eine optimale Entzerrung ist eine möglichst genaue Kenntnis der Störung z.B. bzgl. ihrer statistischen Eigenschaften essentiell.

Dominiert im Übertragungskanal z.B. eine Störung durch näherungsweise additives, weißes, gaußverteiltes Rauschen (AWGN), so sind andere Maßnahmen zur optimalen Entzerrung zu ergreifen als bei Anwesenheit eines Gleich- und/oder Nachbarkanalstörers. Im erstgenannten Fall ist das optimale Verfahren zur Entzerrung dispersiver Kanäle die. Maximum-Likelihood-Sequenzschätzung (Maximum-Likelihood Sequence Estimation, MLSE), beschrieben in G.D. Forney, Jr. "Maximum-Likelihood Sequence Estimation of Digital Sequences in the Presence of Intersymbol Interference", IEEE Transactions on Information Theory, IT-18, 363-378, May 1972, die mittels des Viterbi-Algorithmus durchgeführt werden kann. Im Falle einer Störung z.B. durch Gleichkanalinterferenz lassen sich mit Verfahren wie z. B. Joint MLSE erheblich bessere Ergebnisse erzielen, siehe z.B. K. Giridar et. al., "Joint Demodulation of Cochannel Signals Using MLSE and MAPSD Algorithms", Proceedings of IEEE Int. Conf. on Acoustics, Speech, and Signal Processing. (ICASSP), Minneapolis, 1993, IV-160 - IV-163. Ferner können Verfahren gemäß der EP 1 221 780 erfolgversprechend zum Einsatz kommen.

Es läßt sich somit feststellen, dass sich bei Kenntnis der Art der auf den Übertragungskanal aufgebrachten Störung (Rauschen oder Interferenz) die Leistungsfähigkeit eines digitalen Übertragungssystems durch die Auswahl des jeweils bestgeeigneten Entzerrungsverfahrens erheblich verbessern lässt. Hier ist inbesondere auch von Bedeutung, dass bei TDMA Übertragung die Störverhältnisse von Zeitschlitz zu Zeitschlitz stark variieren können, womit eine zeitschlitzindividuelle Erkennung eines Interferenzsignals die optimale Leistungsfähigkeit liefert.

Die bisher bekannten Verfahren zur Erkennung von Interferenzsignalen basieren überwiegend auf einer Schätzung des Signal-zu-Rausch-plus-Interferenz-Verhältnisses (signal-to-interference plus noise, S/(I+N) oder SINR), aus welchem das Vorliegen eines Interferenzsignals abgeleitet wird. Hier lassen sich im wesentlichen vier unterschiedliche Ansätze nennen:

(1) Interferenz-Projektions-Verfahren (interference projection, IP)
(2) Unterraum-basierts Verfahren (subspace based, SB)
(3) Auswertung der Autokorrelationsfolge des Empfangssignals
(4) Auswertung der spektralen Eigenschaften des Empfangssignals

Das Interferenz-Projektions-Verfahren (1), beschrieben zum Beispiel in M. D. Austin, "In-service signal quality estimation for TDMA cellular systems", *Kluwer Wireless Personal Commun.,* vol. 2, pp. 245-254, 1995, führt eine Schätzung des Signal-zu-Rausch-plus-Interferenz-Verhältnisses (signal-to-interference plus noise, S/(I+N)) durch, wobei jedoch zwischen einer Störung durch z.B. weißes Rauschen und durch Interferenzsignale nicht weiter differenziert wird. Damit ist das dort beschriebene Verfahren, welches zudem einen Schätzwert nur durch Anwendung zeitlicher Mittelung liefert, für die hier angestrebte Anwendung unbrauchbar.

Die Unterraum-basierte Schätzung (2) hat zum Ziel, eine Schätzung des Signal-zu-Interferenz-Vehältnisses zu liefern (signal-to-interference ratio, SIR ), beschrieben z.B. in "Subspace based estimation of the signal to interference ratio for TDMA cellular systems", *IEEE Vehicular Technology Conf.,* Atlanta, GA, pp. 1155 -.1159, April 1996. Die Kenntnis dieses Parameters wäre prinzipiell gut geeignet, einen vorliegenden Störer durch einen Vergleich des Schätzwerts für das Signal-zu-Rausch-Verhältnis mit einer geeignet gewählten Schwelle zu erkennen. Allerdings beruht dieses Verfahren auf der Schätzung einer Kovarianzmatrix und setzt somit die Auswertung einer i.d.R. größeren Anzahl von Empfangssignalsequenzen (bei TDMA Systemen: Zeitschlitzen) voraus. Eine zeitschlitzbasierte Schätzung würde einen Stichprobenumfang der Größe 1 bedeuten, so dass sich dieses Verfahren ebenfalls als ungeeignet erweist.

Eine weitere Methode zur Erkennung von Interferenzsignalen basiert auf einer Auswertung der Autokorrelationsfolge des aus dem Empfangssignal abgeleiteten Störsignals (3), beschrieben z.B. in der EP 1 158 684 A1 mit dem Titel "Method and device for detecting adjacent channel interference in a transmission signal". Eine Auswertung der Autokorrelationseigenschaften des Störsignals liefert jedoch kein zuverlässiges Unterscheidungskriterium bei Gleichkanalstörern, da bei realen Übertragungssystemen die zur Verfügung stehende Kanalbandbreite im allgemeinen weitestgehend genutzt wird, so dass die Autokorrelierte eines Gleichkanal-Störsignals innerhalb der Bandbreite des betrachteten Kanals der von additiven weißem Rauschen sehr ähnlich ist.

Eine prinzipiell ähnliche Problematik ergibt sich bei der Erkennung von Gleich- und/oder Nachbarkanalstörern durch spektrale Analyse des Empfangssignals (4). Während ein solches Verfahren gut geeignet ist, um Nachbarkanalstörer zu erkennen, ist eine zuverlässige Detektion von Gleichkanalstörern mit dieser Methode nicht möglich, da Nutzsignal und Gleichkanalstörsignale i.d.R. ein gleiches oder sehr ähnliches Langzeitspektrum aufweisen und damit das Frequenzspektrum des Empfangssignals kein hinreichendes Unterscheidungskriterium darstellt. Folglich besteht bei allen genannten Verfahren eine hohe Wahrscheinlichkeit, dass ein vorhandener Gleichkanalstörer fälschlicherweise nicht erkannt wird oder ein vorhandenes weißes Rauschen fälschlicherweise als Gleichkanalstörer interpretiert wird.

Aufgabe der Erfindung ist es daher, eine gegenüber dem Stand der Technik verbesserte Möglichkeit der Detektion eines Störers aufzuzeigen, mit welcher insbesondere auch Gleichkanalstörer wesentlich zuverlässiger erkannt werden und welche bei TDMA Übertragungssystemen eine zeitschlitzbasierte Erkennung ermöglicht. Hierbei seien folgende Randbedingungen als erfüllt vorausgesetzt:

- es kommt ein (zumindest näherungsweise) lineares Modulationsverfahren zum Einsatz wie z.B. QAM (Quadrature Amplitude Modulation), PSK (Phase-Shift Keying) oder GMSK (Gaussian Minimum-Shift Keying), wobei letzteres Modulationsverfahren durch gefilterte BPSK (Binary Phase-Shift Keying) approximiert werden kann,

- das Empfangssignal steht als sogenanntes äquivalentes komplexes Basisbandsignal zur Verfügung,

- die erste Nyquistbedingung ist nicht notwendigerweise erfüllt (d.h. es liegen möglicherweise Intersymbolinterferenzen vor),

- es ist kein besonderes Vorwissen über den Übertragungskanal nötig; es wird nur das Senden einer im Empfänger bekannten Trainingssequenz zur empfangsseitigen Schätzung der Kanalimpulsantwort vorausgesetzt,

- das im Empfänger vorhandene Grundrauschen (thermisches Rauschen, Verstärkerrauschen, Quantisierungsrauschen etc.) ist näherungsweise konstant oder jedenfalls in guter Näherung schätzbar.

Diese Aufgabe wird gelöst durch ein Verfahren mit den Merkmalen von Patentanspruch 1 und durch eine Vorrichtung mit den Merkmalen von Patentanspruch 8.

Die Erfindung basiert prinzipiell darauf,

(1) aus dem Empfangssignal geeignete Merkmale abzuleiten, insbesondere - einen Schätzwert für die Leistung des empfangenen Signals $P_{RX}$, sowie - einen Schätzwert für das Signal-zu-Rausch-plus-Interferenz-Verhältnis (SINR); und

(2) diese Merkmale einer Vorrichtung zuzuführen, die anhand derer eine Entscheidung über den Störtyp trifft und dabei eine geringstmögliche Fehlerrate liefert.

Die Hauptanwendung der vorliegenden Erfindung liegt in der Erkennung einer auf den Übertragungskanal aufgebrachten Gleich- und/oder Nachbarkanalstörung, insbesondere in FDMA-basierten Übertragungssystemen, mit Hilfe von in einem betrachteten Empfangssignal enthaltenen Merkmalen.

Mit dem Verfahren nach der Erfindung ist die zuverlässige Erkennung der Störtypen "Gleich- und/oder Nachbarkanalstörer" insbesondere in FDMA-basierten digitalen Übertragungssystemen, wie z.B. dem GSM Mobilfunksystem, gewährleistet, so dass nach Erkennen des Vorliegens einer solchen Störung geeignete Maßnahmen in der Empfangseinrichtung; beispielsweise die Unterdrückung der Störung durch insbesondere adaptive Filterung (Interference Cancellation) oder die konstruktive Einbeziehung der Störung in den Entzerrungsprozeß (beispielsweise durch Multi-User-Detektion) ergriffen werden können.

Weiterhin eignet sich das Verfahren besonders bei TDMA Systemen mit blockweiser Datenübertragung, die bei den meisten Mobilfunkstandards (z.B. GSM) eingesetzt wird. Hier ist aufgrund der sich innerhalb weniger Blöcke stark ändernden Eigenschaften des Übertragungskanals (z.B. durch den Einsatz von Frequenzsprungverfahren, *fre-*

*quency hopping*) eine blockbasierte Schätzung des Störtyps von großem Vorteil.

Damit ermöglicht die Erfindung eine erhebliche Steigerung der Leistungsfähigkeit des Empfängers bezüglich der Rückgewinnung der gesendeten Daten. Dies gilt insbesondere für die. Übertragung in Anwesenheit eines starken Gleich- und/oder Nachbarkanalstörers.

Bei einer besonders bevorzugten Variante wird weiterhin ein Schätzwert für das Signal-zu-Rausch-plus-Restinterferenz-Verhältnis ermittelt, wobei der Entscheidungsvorrichtung auch dieser Schätzwert zugeführt wird. Dadurch lässt sich eine noch präzisere Bestimmung des mindestens einen dominanten Störtyps vornehmen.

Besonders bevorzugt wird bei der Ermittlung des Schätzwerts für das Signal-zu-Rausch- plus-Restinterferenz-Verhältnis zumindest eine Maßnahme zur Interferenzreduktion, insbesondere zur Interferenzunterdrückung, auf das empfangene Signal angewandt. Dadurch lässt sich die Aussagekraft des Schätzwerts für das Signal-zu-Rausch-plus-Restinterferenz-Verhältnis gemeinsam mit dem Schätzwert für das Signal-zu-Rausch-plus-Interferenz-Verhältnis deutlich anheben und eine verbesserte Entscheidungsqualität erzielen.

Bei einer bevorzugten Weiterbildung wird als weiterer Schritt eine Entzerrung des empfangenen Signals auf der Basis des in Schritt b) ermittelten mindestens einen dominanten Störtyps durchgeführt.

Üblicherweise werden in einem realen Digitalübertragungssystem die Daten von zweierlei Störtypen gestört, und zwar durch Rauschen einerseits und Gleichkanal- und/oder Nachbarkanal-Interferenz andererseits. Der Schätzwert für die Leistung des empfangenen Signals lässt Rückschlüsse auf das Rauschen zu, während die beiden anderen Schätzwerte Rückschlüsse auf die Gleichkanal- und/oder Nachbarkanalinterferenz gestatten.

Bei Vorliegen mehrerer Empfangssignale (Antennendiversität) werden bevorzugt die Schätzschritte und die Bestimmung des mindestens einen dominanten Störtyps in der Entscheidungsvorrichtung für jedes Teil-Empfangssignal durchgeführt. Bevorzugt wird auch weiterhin die Entzerrung des empfangenen Signals auf der Basis des mindestens einen als dominant ermittelten Störtyps für jedes Teilempfangssignal separat durchgeführt. Durch diese Maßnahme lassen sich die Vorteile des erfindungsgemäßen Verfahrens bei Antennendiversität maximieren.

Schließlich betrifft die vorliegende Erfindung einen Halbleiterbaustein, in dem das erfindungsgemäße Verfahren abgelegt ist.

Weitere vorteilhafte Ausführungsformen können den Unteransprüchen entnommen werden. Im nachfolgenden werden nunmehr Ausführungsbeispiele der Erfindung unter Bezugnahme auf die beigefügten Zeichnungen näher beschrieben: Es zeigen:

Fig. 1    in Blockschaltbilddarstellung ein erstes Ausführungsbeispiel der Erfindung ohne Antennendiversität;

Fig. 2    in Blockschaltbilddarstellung ein zweites Ausführungsbeispiel der Erfindung ohne Antennendiversität;

Fig. 3    in schematischer Darstellung ein zeitdiskretes Blockschaltbild einer digitalen Übertragung;

Fig. 4    in schematischer Darstellung einen von den Merkmalen ($SINR_{est}, P_{RX}$) aufgespannten Raum mit beispielhaft eingetragenen Wertepaaren sowie zwei möglichen Entscheidungsgrenzen;

Fig. 5    in schematischer Darstellung einen weiteren von den Merkmalen ($SINR_{est}, P_{RX}$) aufgespannten Raum mit beispielhaft eingetragenen Wertepaaren sowie einer Entscheidungsgrenze; und

Fig. 6    in Blockschaltbilddarstellung ein weiteres Ausführungsbeispiel mit N-facher Antennendiversität;

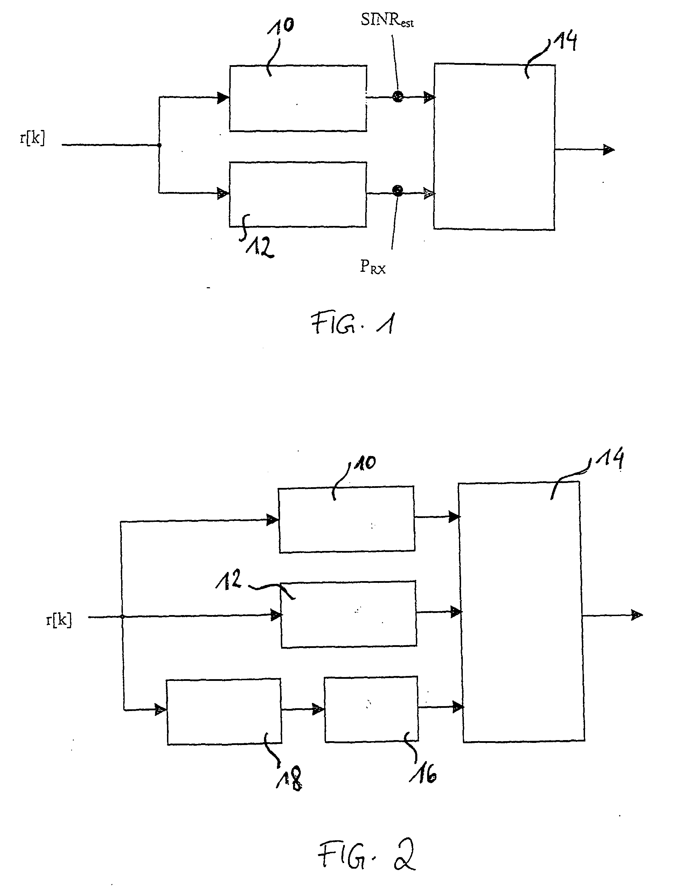

Im folgenden werden für gleiche und gleichwirkende Elemente der verschiedenen Ausführungsbeispiele durchweg gleiche Bezugszeichen verwendet. Mit Bezug auf Figur 1 besteht das Grundprinzip des erfindungsgemäßen Verfahrens in einer ersten einfachen Ausführungsform darin, in einem Block 10 einen Schätzwert für die Größe "Signal-zu-Interferenz-plus-Rausch-Verhältnis (SINR)" sowie in einem Block 12 einen Schätzwert für die Leistung $P_{RX}$ des Empfangssignals zu ermitteln und einer Entscheidereinheit 14 zuzuführen, welche aus diesen beiden Merkmalen eine Entscheidung bzgl. dem Vorhandensein einer Gleich- und/oder Nachbarkanalstörung trifft.

In einer weiteren, in Figur 2 schematisch dargestellten Ausführungsform wird als dritte Größe im Block 16 ein Schätzwert für die Größe "Signal-zu-Restinterferenz-plus-Rausch-Verhältnis" (signal-to-residual-interference-plus-noise, SRINR) in die Entscheidungsfindung mit einbezogen (siehe Figur 2), wobei optional vor dieser Schätzung im Block 18 eine Interferenzunterdrückung durchgeführt wird.

Im folgenden wird zunächst die Bedeutung der genannten Schätzwerte im Zusammenhang mit der vorliegenden Erfindung erläutert.

Schätzwert für die Leistung des Empfangssignals (Block 12)

Jedes Empfangssignal eines realen Übertragungssystems weist Rauschkomponenten auf, die durch thermisches Rauschen des Empfängers sowie evtl. einer Empfangsvorrichtung (z.B. Antenne) bedingt sind. Somit besitzt der Empfänger ein Grundrauschen, welches in erster Näherung innerhalb der nutzbaren Bandbreite des betrachteten Übertragungskanals einem additiven weißen, gaußverteilten Rauschen (AWGN) entspricht. Für das erfindungsgemäße Verfahren muß diese Annahme über die Art des Empfängerrauschens insbesondere hinsichtlich der spektralen Eigenschaften nur näherungsweise erfüllt sein. Wird ein Nutzsignal mit der Leistung $P_{useful}$ ohne auf dem Übertragungskanal, z.B. durch andere Teilnehmer, aufgebrachte Störsignale empfangen, so hängt das sich einstellende momentane Signal-zu-Rausch-Verhältnis (SNR) des Empfangssignals im wesentlichen von seiner Empfangsleistung $P_{RX}$ ab. Es gilt somit unter der Annahme, dass das Rauschsignal additiv und unkorreliert zum Empfangssignal ist:

$$SNR = \frac{P_{useful}}{P_{noise}} = \frac{P_{RX} - P_{noise}}{P_{noise}} \tag{1}$$

womit sich ergibt

$$SNR = \frac{P_{RX}}{P_{noise}} - 1 \tag{2}$$

Es darf in den meisten realen Übertragungssystemen davon ausgegangen werden, dass das Empfängerrauschen mit der Leistung $P_{noise}$ zumindest in guter Näherung bekannt ist. Mit der Kenntnis der Leistung des Empfangssignals liegt somit die Möglichkeit vor, das Signal-zu-Rausch-Verhältnis für den Fall zu bestimmen, dass keine weitere Störung, z.B. durch Gleich- und/oder Nachbarkanalstörer, vorliegt. In realen Systemen sind in obiger Gleichung die tatsächlichen (exakten) Werte der Variablen durch ihre Schätzwerte zu ersetzen.

$$SNR_{est} = \frac{\hat{P}_{RX}}{P_{noise}} - 1 \tag{3}$$

Es existieren entsprechend dem Stand der Technik zahlreiche dem Fachmann bekannten Vorrichtungen und Verfahren zur Schätzung der Leistung von Empfangssignalen, welche nicht Gegenstand der vorliegenden Erfindung sind. Beim Vorliegen des Signals in Form von zeitdiskreten Abtastwerten kann die Leistung des Signals z.B. über eine Bestimmung der Varianz der betrachteten Signalsequenz geschätzt werden.

Schätzwert für das Signal-zu-Interferenz-plus-Rausch-Verhältnis (SINR) (Block 10)

Im folgenden wird ein für diesen Zweck bevorzugtes, nach dem Stand der Technik übliches und dem Fachmann bekanntes Verfahren zur Schätzung des Signal-zu-Rausch-plus-Interferenz-Verhältnisses (SINR) skizziert:

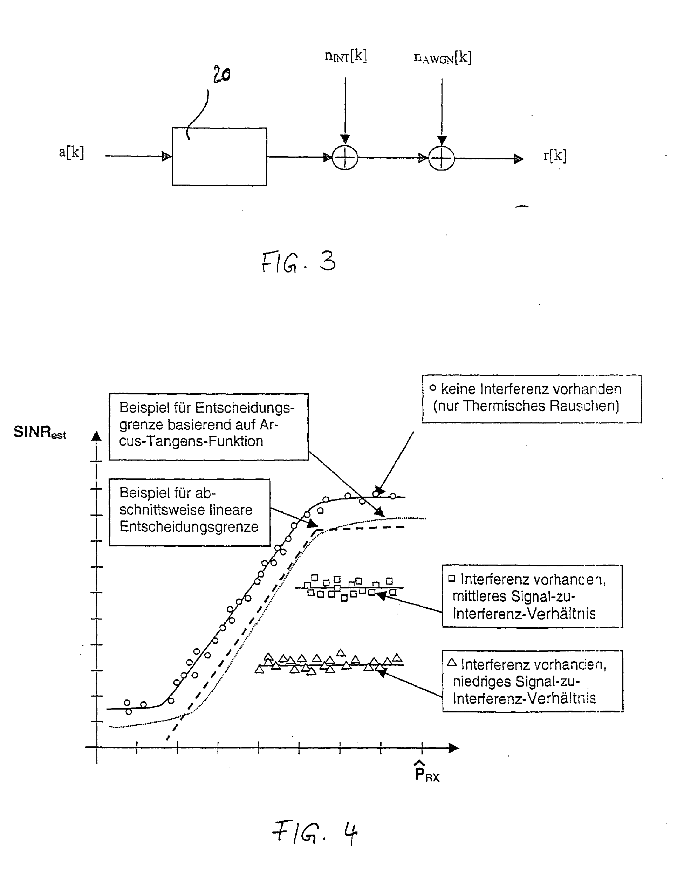

Eine Übertragung mit Pulsamplitudenmodulation (PAM) über einen verzerrenden Kanal, der Intersymbolinterferenzen (ISI) erzeugt, kann bekanntlich zeitdiskret gemäß Figur 3 modelliert werden. Die im Sendesymboltakt 1/T abgetasteten Empfangssignale ergeben sich als durch Störung beeinträchtigte Faltung der PAM-Sendesequenz a[k] mit der Impulsantwort h[k], siehe Block 20 in Figur 3, des Kanals, deren Länge mit L bezeichnet wird:

$$r[k] = \sum_{\kappa=0}^{L-1} h[\kappa]\, a[k - \kappa] + n[k], \tag{4}$$

Je nach verwendetem Modulationsverfahren sind die Amplitudenkoeffizienten a[k] und die Kanalimpulsantworten h[k] entweder rein reell, rein imaginär oder komplex. Durch PAM-Signale können z.B. auch binäre CPM- (Continuous Phase Modulation) Verfahren näherungsweise beschrieben werden, wie in P.A. Laurent "Exact and approximate construction of digital phase modulations by superposition of amplitude modulated pulses (AMP)", IEEE Trans. on Commun., COM 34, 150-160, 1986 beschrieben, die aufgrund ihrer Bandbreiteneffizienz und ihres geringen Spitzenwertfaktors oft in der Mobilkommunikation, wie z.B. beim GSM-System, eingesetzt werden. Es wird bei den Amplitudenkoeffizienten a[k] davon ausgegangen, dass sie im Empfänger a-priori bekannt sind (sogenannte Pilot- oder Trainingssymbole).

Die zeitdiskrete Störung n[k] besteht aus zwei Komponenten:

$$n[k] = n_{AWGN}[k] + n_{INT}[k] \tag{5}$$

wobei $n_{AWGN}[k]$ den AWGN-Anteil symbolisiert, der mittelwertfrei, gaußverteilt und weiß ist (letzteres ist bei Verwendung eines Whitened-Matched-Filters, wie beschrieben in G.D. Forney, Jr. "Maximum-Likelihood Sequence Estimation of Digital Sequences in the Presence of Intersymbol Interference", IEEE Transactions on Information Theory, IT-18, 363-378, May 1972, oder eines allgemeinen Wurzel-Nyquist-Filters als zeitkontinuierliches Empfängereingangsfilter vor der Abtastung gegeben. Die Störung durch $n_{AWGN}[k]$ ist somit physikalisch hauptsächlich auf das oben beschriebene thermische Rauschen in der Empfängereingangsstufe zurückzuführen. $n_{INT}[k]$ stellt die potentielle Störung durch Interferenzsignale dar.

Nun erfolgt zunächst im Empfänger auf Basis der bekannten Symbole a[k] eine Schätzung der Kanalimpulsantwort h[κ], wofür gemäß dem Stand der Technik verschiedene Verfahren zum Einsatz kommen können, die dem Fachmann bekannt und nicht Gegenstand der Erfindung sind (z.B. beschrieben in S.N. Crozier, D.D. Falconer, and S. A. Mahmoud, "Least sum of squared errors (Isse) channel estimation", IEE Proceedings-F, 138:371-378, August 1991).

Anschließend erfolgt basierend auf dem Schätzwert der Kanalimpulsantwort eine Schätzung s[k] des Störanteils, bestehend aus Rauschanteilen und ggf. Interferenzanteilen, gemäß

$$\hat{s}[k] = \hat{n}_{AWGN}[k] + \hat{n}_{INT}[k] = r[k] - \sum_{\kappa=0}^{L-1} \hat{h}[\kappa] \cdot a[k - \kappa]. \qquad (6)$$

Gemäß Gleichung 6 wird vom Empfangssignal der geschätzte Nutzsignalanteil subtrahiert und das Ergebnis als Störsignal interpretiert.

Für das geschätzte Signal-zu-Rausch-plus-Interferenz-Verhältnis $SINR_{est}$ gilt somit:

$$SINR_{est} = \frac{\hat{P}_{useful}}{\hat{P}_{noise} + \hat{P}_{INT}} = \frac{\sum_{\kappa=0}^{L-1} \left| \hat{h}[\kappa] \right|^2}{\frac{1}{M} \sum_{\mu=0}^{M-1} \left| \hat{s}[\mu] \right|^2} \qquad (7)$$

wobei M der Anzahl der der Schätzung zugrunde liegenden diskreten Werte des geschätzten Störsignals entspricht.

Das genaue Verfahren zur Bestimmung des geschätzten Signal-zu-Rausch-plus-Interferenz-Verhältnisses $SINR_{est}$ ist nicht Bestandteil der Erfindung, so dass auch andere Verfahren als das oben beschriebene zum Einsatz kommen können.

<u>Funktionsweise des Entscheiders (Block 14)</u>

Im Folgenden wird die Funktionsweise des Entscheiders (14) an einem einfachen Beispiel skizziert. Zunächst sei angenommen, dass im Empfangssignal außer thermisch bedingtem Empfängerrauschen keine weitere Störung (z.B. durch Störsignale anderer Teilnehmer) vorliegt.

Für diesen Fall entspricht der gemäß Gleichung 7 bestimmte Wert des Signal-zu-Interferenz-plus-Rausch-Verhältnisses SINR per definitionem dem Signal-zu-Rausch-Verhältnis (SNR), d.h. es gilt:

$$SINR = SNR . \qquad (8)$$

Mit Gleichung 3 ergibt sich nunmehr

$$SINR_{est} \approx SNR_{est} = \frac{\hat{P}_{RX}}{P_{noise}} + 1. \ P_{noise} \qquad (9)$$

Unter der Annahme $\hat{P}_{RX} / \hat{P}_{noise} \gg 1$ ist damit ein näherungsweise linearer Zusammenhang zwischen dem Schätzwert für die Leistung des Empfangssignals $P_{RX}$ und dem gemäß Gleichung 7 bestimmten Schätzwert $SINR_{est}$ beschrieben. Dieser Sachverhalt ist in Figur 4 skizziert.

Liegt hingegen zusätzlich zum thermisch bedingten Empfängerrauschen eine additive und zum Nutzsignal und zum Rauschen unkorrelierte Störung durch Interferenzsignale vor, so ist die in Gleichung 8 beschriebene Identität nicht einmal mehr näherungsweise erfüllt. Bei Vorliegen eines solchen Störsignals und einem gleichzeitig relativ hohen Eingangspegel gilt beispielsweise

$$SINR = \frac{P_{useful}}{P_{noise} + P_{INT}} = \frac{P_{RX} - P_{noise} - P_{INT}}{P_{noise} + P_{INT}} << SNR \qquad (10)$$

und damit für die Schätzwerte

$$SINR_{est} << \frac{\hat{P}_{RX}}{P_{noise}} + 1 \qquad (11)$$

Damit liegen für diesen Fall eines vorhandenen Störsignals die Wertepaare mit den Schätzwerten (SINR$_{est}$, P$_{RX}$) im Mittel bezüglich der Ordinate SiNR$_{est}$ unterhalb der durch Gleichung 9 beschriebenen Funktion (siehe Figur 4).

Bestimmung der Entscheidungsgrenze

Bezüglich der Entscheidung über das Vorliegen einer Störung durch Gleich- und/oder Nachbarkanalstörung sind neben der angestrebten fehlerfreien Erkennung grundsätzlich zwei Arten von fehlerhaften Entscheidungen möglich:

• Es liegt im Empfangssignal eine solche Störung vor, die fälschlicherweise nicht erkannt wird (Fehler erster Art)
• Es liegt *keine* solche Störung im Empfangssignal vor, dennoch wird fälschlicherweise auf das Vorliegen einer solchen Störung entschieden (Fehler zweiter Art).

In einem realen Übertragungssystem wird im allgemeinen eine völlig fehlerfreie Erkennung in der Regel nicht möglich sein. Es ist daher die Aufgabe des Entscheiders, die oben erwähnten und zum Teil systembedingt unvermeidlichen Fehlentscheidungen zu minimieren. Dabei kann es zur Optimierung der Leistungsfähigkeit des gesamten Übertragungssystems nötig sein, eine der beiden Fehlerarten unterhalb einer wählbaren Wahrscheinlichkeit zu halten, während das andere Fehlerereignis mit einer deutlich größeren Wahrscheinlichkeit behaftet sein kann (asymmetrische Verteilung der Fehlerereignisse).

Für das oben beschriebene einfache Ausführungsbeispiel mit zwei Merkmalen liegen die Wertepaare der Entscheider-Eingangsvariablen (SINR$_{est}$, P$_{RX}$) in einem zweidimensionalen Raum (Ebene). Aufgabe des Entscheiders ist es insbesondere, diesen Raum in Entscheidungsbereiche zu unterteilen, die dem Vorhandensein bzw. dem Fehlen eines Gleich- und/oder Nachbarkanalstörers entsprechen. Im vorliegenden einfachen Ausführungsbeispiel, veranschaulicht durch Figur 1 und Figur 4, kann eine Separation des Raumes in zwei Bereiche z.B. durch eine abschnittsweise lineare Funktion erfolgen. Gemäß der in Figur 4 beispielhaft dargestellten Verteilung der Wertepaare können zur Trennung der zwei Bereiche jedoch auch andere Funktionen, wie z.B. eine Arcus-Tangens-Funktion, zum Einsatz kommen.

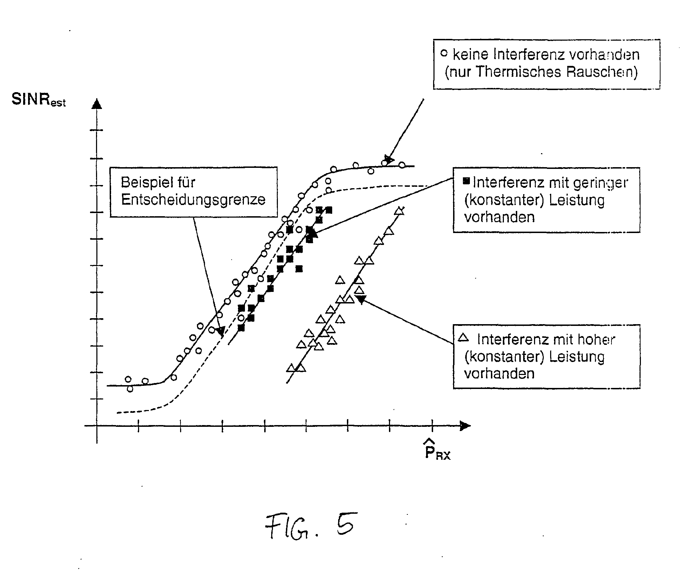

In Figur 5 ist ein ähnlicher Fall beispielhaft dargestellt, in welchem sich die Punktmengen der Wertepaare überlappen, so dass eine vollständige Separation der Bereiche nicht mehr möglich ist.

Anhand der in Figur 4 und Figur 5 dargestellten Beispiele ist erkennbar, dass sich bzgl. der Zuordnung der Wertepaare (SINR$_{est}$, P$_{RX}$) zu den Entscheidungsbereichen keine generell einschränkenden Annahmen treffen lassen. Die Entscheidungsbereiche hängen insbesondere von der genauen Ausführung und den Eigenschaften des betrachteten Übertragungssystems ab. Es können sowohl lineare als auch nichtlineare Funktionen bzw. Relationen zur Abgrenzung der Entscheidungsbereiche voneinander zur Anwendung kommen. Dies schließt ausdrücklich auch nichtlineare Klassifikationsverfahren mit ein, die unter dem Oberbegriff "künstliche neuronale Netze" bekannt sind. Zudem kann es sich als vorteilhaft erweisen, die Entscheidungsbereiche zeitvariant zu definieren, d.h. diese in Abhängigkeit von weiteren Parametern des Übertragungssystems (z.B. Temperatur) zu variieren, welche die Eigenschaften des Empfängers verändern (z.B. thermisches Rauschen der ersten Verstärkerstufe).

Einbeziehung weiterer Merkmale in den Entscheidungsprozess

*Schätzwert für das Signal-zu-Restinterferenz-plus-Rausch-Verhältnis (SRINR) (Block 16)*

Zur weiteren Verbesserung der Leistungsfähigkeit des Entscheiders kann in einem bevorzugten Ausführungsbeispiel als weiteres Merkmal das geschätzte "Signal-zu-Restinterferenz-plus-Rausch-Verhältnis" (signal-to-residual-interference-plus-noise, SRINR) in den Entscheidungsprozess mit einbezogen werden. Zur Bestimmung dieses Merkmals werden im Block 18, siehe Figur 2, aus dem Empfangssignal, soweit möglich, die Anteile eines oder mehrerer dominanter Störsignale entfernt. Unter der in realen Systemen oftmals erfüllten Annahme, dass das Nutzsignal und die Störsignale unkorreliert sind, ergibt sich:

$$SRINR = \frac{P_{useful}}{P_{RI} + P_{noise}}, \qquad (12)$$

wobei

$$P_{RI} = P_{RX} - P_{Nutzsignal} - P_{domInterf} - P_{noise} \qquad (13)$$

die Leistung der Restinterferenz (residual interference), d.h. der noch im Empfangssignal verbliebenen, nicht unterdrückten bzw. entfernten Störanteile darstellt.

Die Bestimmung des Merkmals SRINR erfordert somit eine Unterdrückung dominanter Störsignalanteile mit der Leistung $P_{domInterf}$ bzw. die Kenntnis deren Größe (siehe Figur 2). Dies ist zwar nicht Gegenstand des erfindungsgemäßen Verfahrens, dennoch sei ein bevorzugter Ansatz hierzu im folgenden grob skizziert:

Eine Möglichkeit zur Schätzung des SRINR besteht darin, unter der Hypothese, dass eine Störung durch Gleich- und/oder Nachbarkanalstörer vorliegt, eine Interferenzunterdrückung durchzuführen. Hierzu könnten vorteilhafterweise z.B. Verfahren nach der Lehre der EP 1 221 780 zur Anwendung kommen. Dadurch wird aus dem Empfangssignal ein eventuell vorhandenes dominantes Störsignal entfernt, so dass außer dem Rauschleistungsanteil mit der Leistung $P_{noise}$ nur noch ein nicht unterdrückter Restinterferenzanteil mit der Leistung $P_{RI}$ verbleibt. Nach Durchführung der Interferenzunterdrückung liefert ein Ansatz z.B. nach Gleichung 7 daher den gewünschten Schätzwert $SRINR_{est}$. Es ist offensichtlich, dass bei Vorhandensein eines dominanten Störers und dessen erfolgreicher Unterdrückung der Wert des Signal-zu-Restinterferenz-plus-Rausch-Verhältnis ($SRINR_{est}$) erwartungsgemäß deutlich von dem Wert des Signal-zu-Interferenz-plus-Rausch-Verhältnisses ($SINR_{est}$) abweichen wird. Für den Fall, dass kein Störsignal im Empfangssignal enthalten ist, wird eine Interferenzunterdrückung erfolglos sein, so dass sich für beide Größen ähnliche Werte erwarten lassen. Damit wird deutlich, dass das genannte Merkmal (Signal-zu-Restinterferenz-plus-Rausch-Verhältnis) eine weitere relevante Größe für den Entscheider darstellen kann.

Realisierung des Entscheiders mit drei oder mehr Eingangsmerkmalen

Bei Einbeziehung von drei oder mehr Merkmalen in den Entscheidungsvorgang wird von diesen Merkmalen ein drei- bzw. höherdimensionaler Raum aufgespannt, der vom Entscheider ebenso wie im Falle zweier Merkmale in Entscheidungsbereiche aufgeteilt wird. Die Wahl der Entscheidungsbereiche und damit die entsprechende, im allgemeinen nichtlineare Abbildungsfunktion erfolgt in Abhängigkeit vom jeweils betrachteten Übertragungssystem. Für den Fall von drei Entscheidungsmerkmalen ist eine mögliche bevorzugte Ausführungsform, die Abgrenzung der Teilbereiche durch Ebenenstücke durchzuführen (bereichsweise lineare Separation). Die Grenzen der Entscheidungsbereiche können jedoch ebenso durch geeignete nichtlineare Abbildungen beschrieben werden. Ebenso wie im zweidimensionalen Fall können hier künstliche neuronale Netze zum Einsatz kommen.

Anwendung bei Antennendiversität

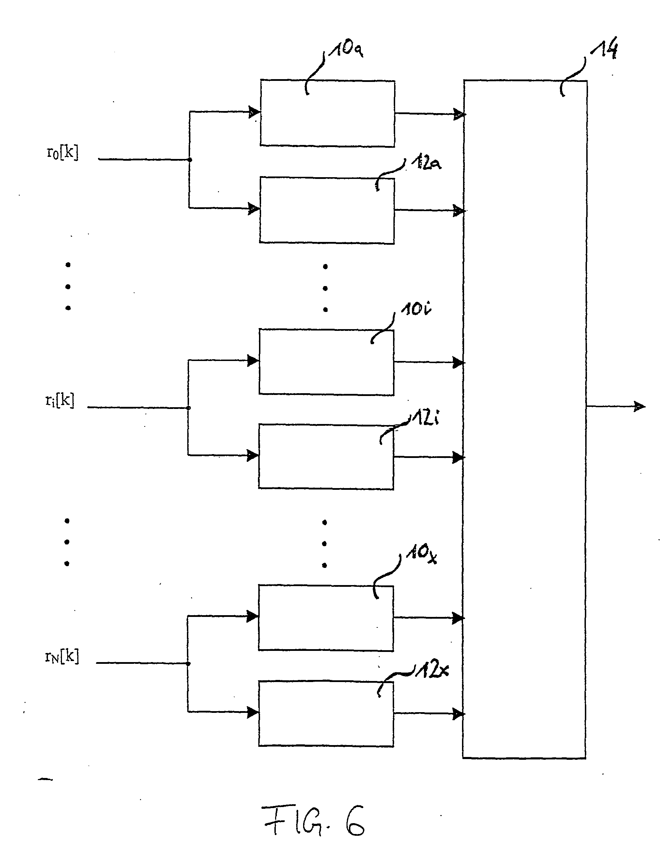

Liegt im Empfänger (z.B. einem Mobilfunkempfänger) N-fache Antennendiversität vor, so können, wie in Figur 6 auf der Basis der in Figur 1 gezeigten einfachen Ausführungsform schematisch dargestellt, für jedes der N unterschiedlichen Empfangssignale individuell die oben beschriebenen Merkmale (Blöcke 10a bis 10x und Blöcke 12a bis 12x) gewonnen werden und einer gemeinsamen Entscheidereinheit 14 zugeführt werden. Dieser Entscheider 14 trifft dann anhand der genannten Merkmale eine Entscheidung über das Vorliegen einer Gleich- und/oder Nachbarkanalstörung. Die Erweiterung auf mehr als zwei Merkmale ist entsprechend.

Liste der verwendeten Formelzeichen:

| | |
|---|---|
| SNR | Signal-zu-Rausch-Verhältnis |
| $SNR_{est}$ | geschätztes Signal-zu-Rausch-Verhältnis |
| SINR | Signal-zu-Interferenz-plus-Rausch-Verhältnis |
| $SINR_{est}$ | geschätztes Signal-zu-Interferenz-plus-Rausch-Verhältnis |
| SRINR | Signal-zu-Restinterferenz-plus-Rausch-Verhältnis |
| $SRINR_{est}$ | geschätztes Signal-zu-Restinterferenz-plus-Rausch-Verhältnis |
| $a[k]$ | Amplitudenkoeffizienten der Sende bzw. Trainingssymbole |
| $r[k]$ | zeitdiskretes Empfangssignal |
| $r_i[k]$ | zeitdiskretes Empfangssignal des i-ten Kanales bei Antennendiversität |
| $n[k]$ | zeitdiskreter Störanteil (Gesamtstörung) |
| $n_{AWGN}[k]$ | zeitdiskreter, durch additives Rauschen verursachter Störanteil |
| $n_{INT}[k]$ | zeitdiskreter, durch Interferenz verursachter Störanteil |
| $\hat{s}[k]$ | geschätzte Folge des Störanteils im zeitdiskreten Empfangssignal |
| $h[k]$ | Kanalimpulsantwort des Nutzsignals |
| $\hat{h}[k]$ | geschätzte zeitdiskrete Kanalimpulsantwort des Nutzsignals |
| L: | Anzahl der Koeffizienten der Impulsantwort $h[k]$ |
| T | Sendesymbolintervall |
| M | Länge der ausgewerteten Empfangssequenz |
| N | Anzahl der Empfangsantennen |
| $P_{RI}$ | Leistung der Restinterferenz (nach Störunterdrückung) |
| $P_{RX}$ | Leistung des Empfangssignals |
| $\hat{P}_{RX}$ | geschätzte Leistung des Empfangssignals |
| $P_{useful}$ | Leistung des Nutzsignalanteils im Empfangssignal |
| $\hat{P}_{useful}$ | geschätzte Leistung des Nutzsignalanteils im Empfangssignal |
| $P_{dominterf}$ | Leistung des dominanten Störanteils, der durch geeignete Interferenzunterdrückung entfernt werden konnte |
| $P_{noise}$ | Leistung des Rauschanteils im Empfangssignal |
| $\hat{P}_{noise}$ | geschätzte Leistung des Rauschanteils im Empfangssignal |

$P_{INT}$      Leistung des Interferenzanteils im Empfangssignal

$\hat{P}_{INT}$      geschätzte Leistung des Interferenzanteils im Empfangssignal

**Patentansprüche**

1. Verfahren zur digitalen Übertragung von Daten, wobei die Übertragung durch Modulation einer Trägerfrequenz erfolgt und durch mindestens zwei unterschiedliche Typen von Störungen gestört wird, auf der Empfängerseite folgende Schritte umfassend:

   a1) Ermitteln eines Schätzwerts für die Leistung des empfangenen Signals;
   a2) Ermitteln eines Schätzwerts für das Signal-zu-Rausch-plus-Interferenz-Verhältnis des empfangenen Signals;
   b) Zuführen zumindest der in den Schritten a1) und a2) ermittelten Schätzwerte an eine Entscheidungsvorrichtung, die anhand mindestens eines vorgebbaren Entscheidungskriteriums mindestens einen dominanten Störtyp bestimmt.

2. Verfahren nach Anspruch 1,
   **gekennzeichnet durch** folgenden weiteren Schritt:

   a3) Ermitteln eines Schätzwerts für das Signal-zu-Rausch-plus-Restinterferenz-Verhältnis,

   wobei in Schritt b) auch der in Schritt a3) ermittelte Schätzwert der Entscheidungsvorrichtung zugeführt wird.

3. Verfahren nach Anspruch 2,
   **dadurch gekennzeichnet,**
   **dass** vor Schritt a3) zumindest eine Maßnahme zur Interferenzreduktion, insbesondere zur Interferenzunterdrükkung, auf das empfangene Signal angewandt wird.

4. Verfahren nach einem der vorhergehenden Ansprüche,
   **gekennzeichnet durch** folgenden weiteren Schritt:

   c) Entzerren des empfangenen Signals auf der Basis des in Schritt b) ermittelten mindestens einen dominanten Störtyps.

5. Verfahren nach Anspruch 4,
   **dadurch gekennzeichnet,**
   **dass** die Übertragung durch Rauschen einerseits und Gleichkanal- und/oder Nachbarkanal-Interferenz andererseits gestört ist.

6. Verfahren nach einem der vorhergehenden Ansprüche,
   **dadurch gekennzeichnet,**
   **dass** bei Vorliegen von Antennendiversität zumindest die Schritte a1), a2) und b) oder die Schritte a1), a2), a3) und b) für jedes Teil-Empfangssignal durchgeführt werden.

7. Verfahren nach Anspruch 6,
   **dadurch gekennzeichnet,**
   **dass** weiterhin der Schritt c) für jedes Teil-Empfangssignal durchgeführt wird.

8. Vorrichtung zum Empfang digital, durch Modulation einer Trägerfrequenz übertragener Daten, umfassend:

   - eine Vorrichtung (12) zur Ermittlung eines Schätzwerts für die Leistung des empfangenen Signals;
   - eine Vorrichtung (10) zur Ermittlung eines Schätzwerts für das Signal-zu-Rausch-plus-Interferenz-Verhältnis des empfangenen Signals; und
   - eine Entscheidungsvorrichtung (14), die an die Vorrichtung (12) zur Ermittlung eines Schätzwerts für die Leistung und an die Vorrichtung (10) zur Ermittlung eines Schätzwerts für das Signal-zu-Rausch-plus-Interferenz-Verhältnis gekoppelt ist und ausgelegt ist, auf der Basis der ermittelten Schätzwerte anhand mindestens eines vorgebbaren Entscheidungskriteriums mindestens einen dominanten Störtyp zu ermitteln.

9. Halbleiterbaustein, in dem das Verfahren nach einem der Ansprüche 1 bis 7 abgelegt ist.

r[k]

SINR$_{est}$

10

14

P$_{RX}$

12

FIG. 1

r[k]

10

12

14

18

16

FIG. 2

*20*

$n_{INT}[k]$    $n_{AWGN}[k]$

$a[k]$    $\longrightarrow$    $\oplus$    $\oplus$    $\longrightarrow$    $r[k]$

FIG. 3

$SINR_{est}$

○ keine Interferenz vorhanden (nur Thermisches Rauschen)

Beispiel für Entscheidungs-grenze basierend auf Ar-cus-Tangens-Funktion

Beispiel für ab-schnittsweise lineare Entscheidungsgrenze

□ Interferenz vorhanden, mittleres Signal-zu-Interferenz-Verhältnis

△ Interferenz vorhanden, niedriges Signal-zu-Interferenz-Verhältnis

$\hat{P}_{RX}$

FIG. 4

FIG. 5

EP 1 501 234 A1

FIG. 6

15

**Europäisches Patentamt**

**EUROPÄISCHER RECHERCHENBERICHT**

Nummer der Anmeldung

EP 03 01 6963

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 6 333 953 B1 (BOTTOMLEY GREGORY E ET AL) 25. Dezember 2001 (2001-12-25) <br> * Spalte 4, Zeile 59 - Spalte 5, Zeile 18 * <br> * Abbildung 3 * <br> --- | 1,4,8 | H04L1/20 <br> H04L25/03 |
| A | US 5 933 768 A (HOOK MIKAEL ET AL) 3. August 1999 (1999-08-03) <br> * Spalte 3, Zeile 45 - Zeile 67 * <br> * Spalte 4, Zeile 24 - Zeile 40 * <br> * Abbildung 6 * <br> --- | 2,3 | |
| A | WO 02 084892 A (MOLNAR KARL JAMES ;DENT PAUL W (US); ERICSSON INC (US)) 24. Oktober 2002 (2002-10-24) <br> * Seite 7, Zeile 1 - Zeile 7 * <br> * Seite 8, Zeile 7 - Zeile 13 * <br> * Seite 11, Zeile 7 - Zeile 11 * <br> * Seite 12, Zeile 17 - Zeile 22 * <br> --- | 1,5,8 | |
| A | US 2003/095614 A1 (CHIZAT ROMAIN) 22. Mai 2003 (2003-05-22) <br> * Seite 2, Spalte 2, Absatz 3 * <br> * Seite 3, Spalte 1, Absatz 3 * <br> --- | 1,3-5,8 | **RECHERCHIERTE SACHGEBIETE (Int.Cl.7)** <br><br> H04L |
| A | POUTTU A ET AL: "Method selection diversity approach to interference suppression" <br> 2002 IEEE SEVENTH INTERNATIONAL SYMPOSIUM ON SPREAD SPECTRUM TECHNIQUES AND APPLICATIONS, <br> Bd. 2, 2. - 5. September 2001, Seiten 623-627 , XP002270678 <br> IEEE, Piscataway, NJ,, USA <br> ISBN: 0-7803-7627-7 <br> * Abbildung 1 * <br> * Seite 625, Spalte 2, Absatz 2 - letzter Absatz * <br> ----- | 1-3,5,8 | |

Der vorliegende Recherchenbericht wurde für alle Patentansprüche erstellt

| Recherchenort | Abschlußdatum der Recherche | Prüfer |
|---|---|---|
| DEN HAAG | 18. Februar 2004 | Moreno, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**             EP 03 01 6963

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-02-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 6333953 | B1 | 25-12-2001 | AU | 747699 B2 | 16-05-2002 |
| | | | AU | 8276498 A | 10-02-1999 |
| | | | BR | 9811283 A | 29-08-2000 |
| | | | CN | 1271489 T | 25-10-2000 |
| | | | EE | 200000043 A | 16-10-2000 |
| | | | EP | 0998805 A1 | 10-05-2000 |
| | | | JP | 2001510958 T | 07-08-2001 |
| | | | WO | 9904537 A1 | 28-01-1999 |
| US 5933768 | A | 03-08-1999 | AU | 6640698 A | 18-09-1998 |
| | | | CN | 1135716 B | 21-01-2004 |
| | | | EP | 1012991 A1 | 28-06-2000 |
| | | | JP | 2001513956 T | 04-09-2001 |
| | | | WO | 9838750 A1 | 03-09-1998 |
| WO 02084892 | A | 24-10-2002 | US | 2002044614 A1 | 18-04-2002 |
| | | | EP | 1380116 A1 | 14-01-2004 |
| | | | WO | 02084892 A1 | 24-10-2002 |
| US 2003095614 | A1 | 22-05-2003 | EP | 1313276 A1 | 21-05-2003 |
| | | | AT | 244968 T | 15-07-2003 |
| | | | DE | 50100374 D1 | 14-08-2003 |

EPO FORM P0461

Für nähere Einzelheiten zu diesem Anhang : siehe Amtsblatt des Europäischen Patentamts, Nr.12/82